# EUROPEAN PATENT APPLICATION

(11) **EP 4 819 531 A1**
(43) Date of publication of application: **07.10.2026**
(21) Application number: 26169302.2
(22) Date of filing: 30.03.2026
(51) Int. Cl.: H04L 9/00, G06N 20/00

(54) **QUANDLE-BASED CRYPTOGRAPHY**

(30) Priority: 02.04.2025 IL 32004925; 27.11.2025 US 202519403073
(71) Applicant: Mellanox Technologies, Ltd., 2069200 Yokneam (IL); Bar-Ilan University, 5290002 Ramat Gan (IL)
(72) Inventor: CARMI, Avishy, 2069200 Yokneam (IL); MENTOVICH, Elad, 2069200 Yokneam (IL); ZAHAVI, Eitan, 2069200 Yokneam (IL); RUSO, Ran Hasson, 2069200 Yokneam (IL); COHEN, Eliahu, 5290002 Ramat Gan (IL)
(74) Representative: Mathys & Squire

(57) **Abstract**

A method for secure computation includes receiving a specification of an input variable including one or more first elements of a quandle and an arithmetic computation to be performed over the input variable. The input variable is encrypted using a first operation of the quandle performed over the input variable together with an encoding variable including one or more non-unity second elements of the quandle. The arithmetic computation is applied to the encrypted input variable to produce an encrypted output variable. The encrypted output variable is decrypted using the encoding variable and a second operation of the quandle to obtain a result of the arithmetic computation over the variable.

## Description

### FIELD OF THE INVENTION

The present invention relates generally to cryptography, and specifically to performing cryptographic and other computational functions using quandle operations.

### BACKGROUND

Quandles are mathematical structures that encode the topological properties and symmetries of knots and braids. These concepts are described, for example, by Moskovich and Carmi in "Tangle machines," *Proceedings of the Royal Society A* **471**:20150111. The authors illustrate how knots and braids can be used in applications such as information processing and computations, as well as how they can be represented symbolically using a formalism referred to as a "quandle."

Formally, a quandle is defined as a set Q of elements, e.g., x,y,z ∈ Q, and two binary operations, ▷,◁, which operate on the elements of Q, i.e., ▷,◁: QxQ → Q. The elements of the quandle may be, for example, integers, rational numbers, or multidimensional elements, such as vectors or matrices. The binary operations satisfy the following properties over all the elements in Q:
- Idempotence: *x* ▷ *x* = *x .*
- Reversibility: (*x* ▷ *y*) ◁ *y = x.* The reverse operations ▷ and ◁ are referred to herein as complementary operations.
- Distributivity: (*x* ▷ *y*) ▷ z = (*x* ▷ *z*) ▷ (*y* ▷ *z*)*.*

Moskovich and Carmi describe a number of specific examples of quandles that meet these criteria, including:
- Conjugation quandles: $x ⊳ y = {y}^{- 1} xy$
- Linear quandles: $x ⊳ y = \left(1-s\right) x + sy$
- Loglinear quandles:
$x ⊳ y = {x}^{1 - s} {y}^{s}$

Other sets of elements and operations satisfying the above definition of a quandle are identified in the description below.

Homomorphic encryption schemes allow arithmetic computations to be performed on encrypted data such that when the result is decrypted, it will be identical to the result that would have been obtained by applying the same arithmetic computations to the original, unencrypted data. Thus, homomorphic encryption allows the owner of secret data to pass the data in encrypted form to an outsourced service, such as a cloud-based computation or storage service, without having to provide a decryption key.

### SUMMARY

The invention is defined by the claims. In order to illustrate the invention, aspects and embodiments which may or may not fall within the scope of the claims are described herein.

Embodiments of the present invention that are described herein provide methods, systems, and software for performing cryptographic computations using quandles.

The disclosure provides a method for secure computation that includes receiving a specification of an input variable comprising one or more first elements of a quandle and an arithmetic computation to be performed over the input variable. The method includes encrypting the input variable using a first operation of the quandle performed over the input variable together with an encoding variable comprising one or more non-unity second elements of the quandle. The arithmetic computation is applied to the encrypted input variable to produce an encrypted output variable. The method further includes decrypting the encrypted output variable using the encoding variable and a second operation of the quandle to obtain a result of the arithmetic computation over the variable.

The elements of the quandle may include non-integer rational numbers or may be multi-dimensional. The method may include applying a first encryption key in performing the first operation and applying a second encryption key in performing the second operation. In some aspects, the first encryption key may be a public key, and the second encryption key may be a private key complementary to the public key. The encoding variable may be part of at least the first encryption key.

The arithmetic computation may include one or more multiplications and may also include one or more modular additions. In some cases, encrypting the input variable may include applying a sequence of multiple quandle operations over the input variable together with the encoding variable. The sequence of multiple quandle operations may include at least a first operation belonging to a first quandle and a second operation belonging to a second quandle, different from the first quandle.

In some examples, the first operation of the quandle is $c = x ⊳ y = y {\left(\frac{x}{y}\right)}^{e}$, and the second operation of the quandle is $x = c ⊲ y = y {\left(\frac{c}{y}\right)}^{f}$*,* wherein x and y are the first and second elements of the quandle, respectively, c is the encrypted input variable, and e and f are complementary encryption keys. In other embodiments, the first and second operations are conjugation operations, linear operations, or loglinear operations.

The disclosure also provides a system for secure computation that includes a memory to store an input variable including one or more first elements of a quandle, and at least one processor to perform the secure computation method described herein.

Additionally, the disclosure provides a computer software product with instructions stored on a non-transitory computer-readable medium that, when read by a computer, cause the computer to perform the secure computation method.

Any feature of one aspect or embodiment may be applied to other aspects or embodiments, in any appropriate combination. In particular, any feature of a method aspect or embodiment may be applied to an apparatus aspect or embodiment, and vice versa.

The present invention will be more fully understood from the following detailed description of the embodiments thereof, taken together with the drawings in which:

### BRIEF DESCRIPTION OF THE DRAWINGS

Fig. 1 is a block diagram that schematically illustrates a system for secure computation, in accordance with an embodiment of the invention; and
Fig. 2 is a schematic illustration of a braid used for encryption and decryption, in accordance with an embodiment of the invention.

### DETAILED DESCRIPTION OF EMBODIMENTS

Embodiments of the present invention that are described herein use quandles to encrypt and decrypt data. Depending on the type of quandle that is chosen, the data may comprise integers, rational numbers, vectors, or matrices, for example. In the disclosed embodiments, a computer encrypts an input variable x, which is an element of the quandle, using a first operation of the quandle, which is performed over the input variable together with an encoding variable y, which comprises one or more other non-unity elements of the quandle (i.e., *y* ≠ 1). In other words, the variable x is encrypted to create a codeword c by the quandle operation *x* ▷ *ₛy = c*. The secret key used in the encryption may comprise a parameter of the quandle operation (such as the value s in the above-mentioned linear and loglinear quandles) and/or the encoding variable *y*.

Encrypted values are decrypted using a second, complementary operation of the quandle: *c* ◁ *ₛ y* = *x*. Depending on the types of quandle operations used, the encryption may be symmetrical, using the same key for decryption as for encryption; or it may be asymmetrical, using a public key for encryption, for example, and a complementary private key for decryption. In this case, the parameters of the quandle operations may be used in both the public and the private keys of an asymmetrical cryptographic scheme.

Quandle-based encryption can be applied to multiple data types, as noted above, and it can be made substantially more complex and difficult to crack than existing schemes. To increase the complexity and resistance to attack, a "braid" of multiple, successive quandle operations can be applied to the input variable and the encoding variable, wherein each crossing of the strands corresponds to a specific binary operation involving the elements traversing these strands. The sequence of multiple quandle operation can even include operations belonging to two or more different quandles. Additionally or alternatively, the sequence can include multiple different encoding variables and/or input variables, with successive quandle operations that braid the variables together in different combinations, which can be chosen arbitrarily.

Quandle-based encryption also has the advantage of supporting homomorphic computation. Quandle-based encryption using a linear or loglinear quandle (and in some cases the conjugation quandle, as well) is inherently homomorphic with respect to multiplication, meaning that for a pair of input variables *x₁* and *x₂,* (*x*₁ ▷ *y*₁)(*x*₂ ▷ *y*₂) = (*x*₁*x*₂) ▷ (*y*₁*y*₂). The linear quandle is also homomorphic with respect to addition.

With some adjustments found by the inventors, loglinear quandle-based encryption can be also made homomorphic with respect to modular addition. Specifically, for a loglinear quandle, it can be proven that $\left[\left({x}_{1}p⊳y\right)+\left({x}_{2}q⊳y\right)\right] mod n = \left[\left({x}_{1}p+{x}_{2}q\right)\right] ⊳ y mod n ,$ wherein *p* and *q* are prime numbers, and *n* = *pq.* Using this approach it is possible, for example, to compute the sum *x*₁ *+ x*₂ by combining decrypted messages using the formula: [(*x*₁*p* ▷ *y*) *+* (*x*₂*q* ▷ *y*)] ◁ y + [(*x*₁*q* ▷ *y*) *+* (*x*₂*p* ▷ *y*)] ◁ *y* = (*x*₁ *+ x*₂)(*p + q*) mod *n*, followed by division by *p + q* to obtain the sum of interest.

The primes *p* and *q* may be used in generating the keys used in an asymmetric quandle-based encryption scheme. To avoid possible disclosure of the secret key, *p* and *q* can be concealed in homomorphic computations by using some rational number *m* to compute *p*' = *p* ▷ *m* and *q'* = *q* ▷ *m*. The values *p'* and *q'* can then be used in homomorphic computations in the same manner as *p* and *q.* More generally, *p* and *q* can be zero divisors in the cyclic group $ℤ / nℤ$ or any group isomorphic to it.

Although the present description relates particularly to homomorphic properties of loglinear quandles, the principles of these embodiments may likewise be applied to other quandles, *mutatis mutandis.* For example, as noted above, the linear quandle is homomorphic with respect to both multiplication and addition, and other quandle structures can be shown to be homomorphic, as well.

The disclosed embodiments make use of the homomorphic properties of quandle-based encryption in performing secure computations. For this purpose, a user of a computational system specifies an input variable comprising one or more elements of a quandle and an arithmetic computation to be performed over the variable. The system encrypts the input variable by performing a first operation of the quandle over the input variable together with an encoding variable, which itself comprises one or more non-unity elements of the quandle.

The specified arithmetic computation is then applied to the encrypted input variable to produce an encrypted output variable. The computation may be applied, for example, by a network service that is not necessarily secure. The arithmetic computation may comprise one or more multiplications and/or one or more modular addition operations. The encrypted output variable is then decrypted using the encoding variable and a second operation of the quandle to obtain the result of the arithmetic computation over the input variable.

Any suitable type of quandle may be used for purposes of the encryption and decryption operations. For example, the quandle operations used for encryption may comprise conjugation operations, linear operations, loglinear operations, or sequences of quandle operations belonging to the same quandle or to different quandles.

As another example, the first quandle operation, used to encrypt the input variable x, may be of the form: $c = x ⊳ y = y {\left(\frac{x}{y}\right)}^{e}$ , giving the encrypted input variable c, while the second quandle operation is of the form: $x = c ⊲ y = y {\left(\frac{c}{y}\right)}^{f}$*.* In this example, *e* and *f* are complementary encryption keys. Specifically, *e* and *f* may serve as public and private encryption keys, respectively, and may be chosen in a manner similar to the key generation algorithm used in conventional asymmetric encryption schemes, such as RSA. For this purpose, a pair of large prime numbers *p* and *q* are chosen, giving the modulus *n* = *pq* and the Euler totient function *φ*(*n*) = (*p -* 1) (*q -* 1). The keys e and f are chosen such that *e* < *φ*(*n*) and *ef =* 1 mod φ(*n*)*.* Alternatively, Carmichael's totient function λ(*n*) may be used in place of *φ*(*n*)*.* Despite the use of a known key generation algorithm, the more complex functional form of these quandle operations, including the non-unity encoding variable *y*, makes the quandle-based encryption scheme less vulnerable to attack. This quandle is homomorphic with respect to modular addition performed using the modulus *n*.

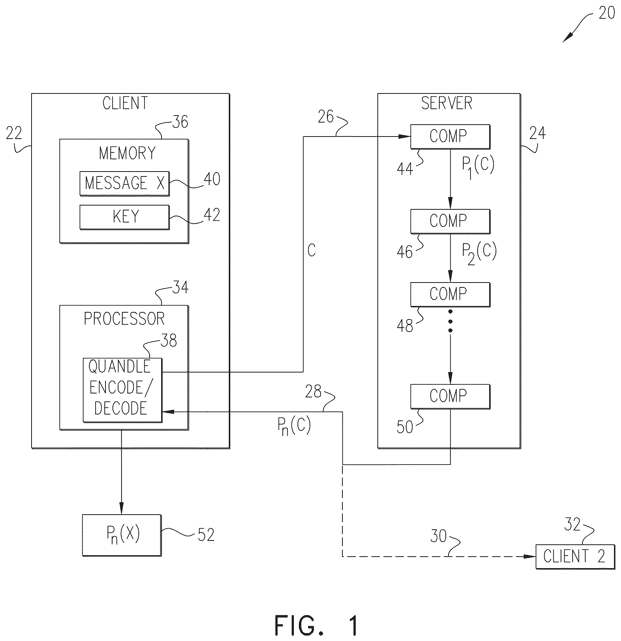

Fig. 1 is a block diagram that schematically illustrates a system 20 for secure computation, in accordance with an embodiment of the invention. System 20 in this example comprises a client computer 22, which communicates over a communication network, such as a switch fabric in a data center, with a server 24. Server 24 may comprise a computational accelerator, which provides highspeed computation services to clients on the network. In this example, client computer 22 is the originating computer, which receives a specification of an input variable x and an arithmetic computation P to be performed over the variable, while server 24 serves as the intermediate computer that performs the specified computation.

Client computer 22 comprises a processor 34 and a memory 36. Processor 34 typically comprises a microprocessor, which is programmed in software to carry out the functions that are described herein, including a quandle-based encoding and decoding function 38. The software may be downloaded to client computer 22 in electronic form, for example over a network. Additionally or alternatively, the software may be stored on tangible, non-transitory computer-readable storage media. Further additionally alternatively, at least some of the components of quandle-based encoding and decoding function 38 may be implemented in dedicated or programmable hardware logic circuits.

Memory 36 stores a message 40 comprising an input variable x and an encryption key 42 for use by quandle-based encoding and decoding function 38 in encrypting x to generate a corresponding encrypted input variable c. Client computer 22 encrypts *x* using a first quandle operation (or a sequence of quandle operations) performed over the input variable *x* together with an encoding variable *y* comprising one or more non-unity elements of the quandle. Client computer then transmits *c* over a communication link 26 in the network to server 24.

Server 24 applies the specified arithmetic computation to the encrypted input variable c in a sequence of computational stages 44, 46, 48, ... 50. The computation is performed homomorphically, i.e., although the computation was specified with respect to the input variable *x*, server 24 applies computational stages 44, 46, 48, ... 50 to the encrypted input variable *c* to produce an encrypted output variable Pₙ(*c*).

Server 24 transmits the encrypted output variable over a communication link 28 in the network to a receiving computer, which decrypts the encrypted output variable using the appropriate complementary quandle operation and decryption key. The receiving computer thus obtains a result 52 of the arithmetic computation Pₙ(*x*) over the original variable *x*, which is the same result as would have been obtained by applying the specified computation to the original, unencrypted data. In the pictured example, the receiving computer is the originating computer, i.e., client computer 22. Alternatively or additionally, the encrypted output variable may be transmitted over another communication link 30 to another client computer 32, which has the necessary key and quandle decryption capability to decrypt Pₙ(*c*).

As noted above, quandle-based encoding and decoding function 38 may apply either a symmetrical or asymmetrical encryption scheme in encrypting x and decrypting Pₙ(*c*). Because of the homomorphic nature of the encryption, however, the secret key that is used in the decryption operation need not be accessible to server 24. Thus, the computational capabilities of the server can be exploited without having to verify and trust the data security of the server.

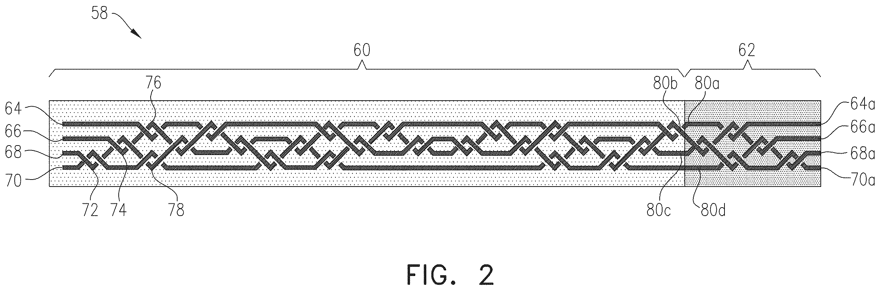

Fig. 2 is a schematic illustration of a braid 58 used for encryption and decryption, in accordance with an embodiment of the invention. Braid 58 represents graphically a sequence of quandle operations performed on an input variable *x*, which is received at an input 64, and a set of encoding variables *yᵢ* received at inputs 66, 68, 70. The encoding variables may be chosen at random, or they may represent additional input variables, which are encrypted together with the input variable *x* to produce a combined encrypted result. Braid 58 comprises a series of crossings 72, 74, 76, 78..., each representing a binary quandle operation performed between a pair of the variables, using corresponding secret keys. The quandle operations may belong to the same quandle or different quandles and may use the same keys or different keys. The quandle operations are chosen, however, so that at the end of braid 58, the tangles are unraveled to return the original, plaintext inputs at outputs 64a, 66a, 68a, and 70a, respectively.

Braid 58 is divided into an encryption sub-braid 60 and a decryption sub-braid 62. Encryption sub-braid 60 can serve as a public encryption function, like the public key of an asymmetric encryption scheme, and outputs encrypted codewords at outputs 80a, 80b, 80c and 80d. Decryption sub-braid 62 is needed to decrypt these codewords and is therefore held like a private key.

The codewords from outputs 80a, 80b, 80c and 80d may be transmitted over a communication link, for example, and may be input to a specified arithmetic operation. The homomorphic properties of the quandle-based encryption schemes described above apply, as well, to the sequential encryption scheme represented by braid 58. After application of the arithmetic operation to the codewords output by sub-braid 60, the encrypted computational results may be decrypted using sub-braid 62.

In more formal terms, a user prepares braid 58 by defining strings of complementary quandle operations *Rᵢ, Lᵢ* on *x* and *y*₁, ... , *yₙ*. These strings of operations result in two vector-valued functions $\vec{f} \left(x,{y}_{1},…,{y}_{n}\right) : {ℚ}^{n + 1} \to {ℚ}^{n + 1}$ (represented by sub-braid 60) and $\vec{g} \left(x,{y}_{1},…,{y}_{n}\right) : {ℚ}^{n + 1} \to {ℚ}^{n + 1}$ (represented by sub-braid 62). The functions are chosen such that $\vec{f} ∘ \vec{g} = \vec{I}$ , wherein 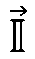 is the identity function, meaning that at the end of the braid, all the strands are untangled. *̅f̅*̅ may be public and used for encryption, while *̅g̅*̅ is kept private and used for decryption. *̅f̅*̅ and *̅g̅*̅ are based on strings containing any number of rational numbers *z* ∈ {*x, y*₁, *...* , *yₙ*}, along with the operations and parentheses meaningfully inserted between them (since the underlying algebraic structure is non-associative).

Thus, the controlling party *D* can share with all users *Eⱼ* a black box function, *f̅,* which they can use for encoding, but this function is extremely hard to invert for any *Eⱼ* ≠ *D.* Only *D* knows: (1) How the black box was generated, (2) How to algebraically invert each quandle operation, and (3) How to topologically invert *̅g̅*̅ and untangle the knot. In the present embodiment, *D* uses these capabilities in decrypting the results of a homomorphic computation performed on the encoded data by one or more of the other users *Eⱼ*.

The embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A method for secure computation, comprising:
   receiving a specification of an input variable comprising one or more first elements of a quandle and an arithmetic computation to be performed over the input variable;
   encrypting the input variable using a first operation of the quandle performed over the input variable together with an encoding variable comprising one or more non-unity second elements of the quandle;
   applying the arithmetic computation to the encrypted input variable to produce an encrypted output variable; and
   decrypting the encrypted output variable using the encoding variable and a second operation of the quandle to obtain a result of the arithmetic computation over the variable.
Clause 2. The method according to clause 1, wherein the elements of the quandle comprise non-integer rational numbers.
Clause 3. The method according to clause 1, wherein the elements of the quandle are multi-dimensional.
Clause 4. The method according to clause 1, wherein encrypting the input variable comprises applying a first encryption key in performing the first operation, and wherein decrypting the encrypted output comprises applying a second encryption key in performing the second operation.
Clause 5. The method according to clause 4, wherein the first encryption key is a public key, and the second encryption key is a private key, which is complementary to the public key.
Clause 6. The method according to clause 4, wherein the first encryption key is identical to the second encryption key.
Clause 7. The method according to clause 4, wherein the encoding variable is a part of at least the first encryption key.
Clause 8. The method according to clause 4, wherein the encrypted output variable is decrypted by a first processor using the second encryption key, and wherein the arithmetic computation is applied by a second processor, which does not have access to the second encryption key.
Clause 9. The method according to clause 1, wherein the arithmetic computation comprises one or more multiplications.
Clause 10. The method according to clause 9, wherein the arithmetic computation comprises one or more modular additions.
Clause 11. The method according to clause 1, wherein encrypting the input variable comprises applying a sequence of multiple quandle operations, including the first operation, over the input variable together with the encoding variable.
Clause 12. The method according to clause 11, wherein the sequence of multiple quandle operation comprises at least the first operation belonging to a first quandle and a second operation belonging to a second quandle, different from the first quandle.
Clause 13. The method according to clause 1, wherein the first operation of the quandle is $c = x ▷ y = y {\left(\frac{x}{y}\right)}^{e}$, and the second operation of the quandle is $x = c ◁ y = y {\left(\frac{c}{y}\right)}^{f} ,$*,* wherein x and y are the first and second elements of the quandle, respectively, c is the encrypted input variable, and e and f are complementary encryption keys.
Clause 14. The method according to clause 1, wherein the first and second operations are conjugation operations.
Clause 15. The method according to clause 1, wherein the first and second operations are linear operations.
Clause 16. The method according to clause 1, wherein the first and second operations are loglinear operations.
Clause 17. A method for secure computation, comprising:
   receiving a specification of an input variable comprising one or more first elements of a quandle and an arithmetic computation to be performed over the input variable;
   encrypting the input variable using a first operation of the quandle performed over the input variable together with an encoding variable comprising one or more non-unity second elements of the quandle; and
   applying the arithmetic computation to the encrypted input variable to produce an encrypted output variable,
   wherein the encrypted output variable is decryptable using the encoding variable and a second operation of the quandle to obtain a result of the arithmetic computation over the variable.
Clause 18. A method for secure computation, comprising:
   receiving an input variable comprising one or more first elements of a quandle, which has been encrypted using a first operation of the quandle performed over the input variable together with an encoding variable comprising one or more non-unity second elements of the quandle, and an arithmetic computation to be performed over the input variable;
   applying the arithmetic computation to the encrypted input variable to produce an encrypted output variable; and
   decrypting the encrypted output variable using the encoding variable and a second operation of the quandle to obtain a result of the arithmetic computation over the variable.
Clause 19. A system for secure computation, comprising:
   a memory to store an input variable comprising one or more first elements of a quandle; and
   at least one processor to receive a specification of an arithmetic computation to be performed over the input variable, to encrypt the input variable using a first operation of the quandle performed over the input variable together with an encoding variable comprising one or more non-unity second elements of the quandle, to cause the arithmetic computation to be applied to the encrypted input variable to produce an encrypted output variable, and to decrypt the encrypted output variable using the encoding variable and a second operation of the quandle to obtain a result of the arithmetic computation over the variable.
Clause 20. The system according to clause 19, wherein the arithmetic computation comprises one or more multiplications.
Clause 21. The system according to clause 20, wherein the arithmetic computation comprises one or more modular additions.
Clause 22. The system according to clause 19, wherein the at least one processor comprises a first processor to decrypt the encrypted output variable using an encryption key, and wherein the arithmetic computation is applied by a second processor, which does not have access to the encryption key.
Clause 23. The system according to clause 19, wherein the at least one processor is to encrypt the input variable by applying a sequence of multiple quandle operations, including the first operation, over the input variable together with the encoding variable.
Clause 24. A computer software product, comprising a non-transitory computer-readable medium in which program instructions are stored, which instructions, when read by a computer, cause the computer to receive a specification of an input variable comprising one or more first elements of a quandle and an arithmetic computation to be performed over the input variable, to encrypt the input variable using a first operation of the quandle performed over the input variable together with an encoding variable comprising one or more non-unity second elements of the quandle, to cause the arithmetic computation to be applied to the encrypted input variable to produce an encrypted output variable, and to decrypt the encrypted output variable using the encoding variable and a second operation of the quandle to obtain a result of the arithmetic computation over the variable.

## Claims

1. A method for secure computation, comprising:
receiving a specification of an input variable comprising one or more first elements of a quandle and an arithmetic computation to be performed over the input variable;
encrypting the input variable using a first operation of the quandle performed over the input variable together with an encoding variable comprising one or more non-unity second elements of the quandle;
applying the arithmetic computation to the encrypted input variable to produce an encrypted output variable; and
decrypting the encrypted output variable using the encoding variable and a second operation of the quandle to obtain a result of the arithmetic computation over the variable.

2. The method according to claim 1, wherein the elements of the quandle comprise non-integer rational numbers or are multi-dimensional.

3. The method according to claim 1 or 2, wherein encrypting the input variable comprises applying a first encryption key in performing the first operation, and wherein decrypting the encrypted output comprises applying a second encryption key in performing the second operation.

4. The method according to claim 3, wherein the first encryption key is a public key, and the second encryption key is a private key, which is complementary to the public key.

5. The method according to claim 3 or 4, wherein the first encryption key is identical to the second encryption key.

6. The method according to claim 3, 4, or 5, wherein the encoding variable is a part of at least the first encryption key.

7. The method according to any of claims 3-6, wherein the encrypted output variable is decrypted by a first processor using the second encryption key, and wherein the arithmetic computation is applied by a second processor, which does not have access to the second encryption key.

8. The method according to any preceding claim, wherein the arithmetic computation comprises one or more multiplications, wherein the arithmetic computation comprises one or more modular additions.

9. The method according to any preceding claim, wherein encrypting the input variable comprises applying a sequence of multiple quandle operations, including the first operation, over the input variable together with the encoding variable, wherein the sequence of multiple quandle operation comprises at least the first operation belonging to a first quandle and a second operation belonging to a second quandle, different from the first quandle.

10. The method according to any preceding claim, wherein the first operation of the quandle is $c = x ▷ y = y {\left(\frac{x}{y}\right)}^{e}$, and the second operation of the quandle is $x = c ◁ y = y {\left(\frac{c}{y}\right)}^{f}$*,* wherein x and y are the first and second elements of the quandle, respectively, c is the encrypted input variable, and e and f are complementary encryption keys.

11. The method according to any preceding claim, wherein the first and second operations are conjugation operations, linear operations, or loglinear operations.

12. A method for secure computation, comprising:
receiving a specification of an input variable comprising one or more first elements of a quandle and an arithmetic computation to be performed over the input variable;
encrypting the input variable using a first operation of the quandle performed over the input variable together with an encoding variable comprising one or more non-unity second elements of the quandle; and
applying the arithmetic computation to the encrypted input variable to produce an encrypted output variable,
wherein the encrypted output variable is decryptable using the encoding variable and a second operation of the quandle to obtain a result of the arithmetic computation over the variable.

13. A method for secure computation, comprising:
receiving an input variable comprising one or more first elements of a quandle, which has been encrypted using a first operation of the quandle performed over the input variable together with an encoding variable comprising one or more non-unity second elements of the quandle, and an arithmetic computation to be performed over the input variable;
applying the arithmetic computation to the encrypted input variable to produce an encrypted output variable; and
decrypting the encrypted output variable using the encoding variable and a second operation of the quandle to obtain a result of the arithmetic computation over the variable.

14. A system for secure computation, comprising:
a memory to store an input variable comprising one or more first elements of a quandle; and
at least one processor to receive a specification of an arithmetic computation to be performed over the input variable, to encrypt the input variable using a first operation of the quandle performed over the input variable together with an encoding variable comprising one or more non-unity second elements of the quandle, to cause the arithmetic computation to be applied to the encrypted input variable to produce an encrypted output variable, and to decrypt the encrypted output variable using the encoding variable and a second operation of the quandle to obtain a result of the arithmetic computation over the variable.

15. A computer software product, comprising a non-transitory computer-readable medium in which program instructions are stored, which instructions, when read by a computer, cause the computer to receive a specification of an input variable comprising one or more first elements of a quandle and an arithmetic computation to be performed over the input variable, to encrypt the input variable using a first operation of the quandle performed over the input variable together with an encoding variable comprising one or more non-unity second elements of the quandle, to cause the arithmetic computation to be applied to the encrypted input variable to produce an encrypted output variable, and to decrypt the encrypted output variable using the encoding variable and a second operation of the quandle to obtain a result of the arithmetic computation over the variable.
